# EUROPEAN PATENT SPECIFICATION

(11) **EP 3 689 795 B1**
(45) Date of publication and mention of the grant of the patent: **25.12.2024**
(21) Application number: 19154939.3
(22) Date of filing: 31.01.2019
(51) Int. Cl.: B65G 11/16, B65G 11/20, B65G 11/08

(54) **CHUTE FOR PACKAGES**
RUTSCHE FÜR VERPACKUNGEN
GOULOTTE POUR EMBALLAGES

(43) Date of publication of application: 05.08.2020
(73) Proprietor: Amazon Technologies, Inc., Reno, NV 89507 (US)
(72) Inventor: KHAN, Bijoysri, Seattle WA 98108-1226 (US)
(74) Representative: D Young & Co LLP

(56) References cited:
- EP-A1- 0 947 448
- EP-A1- 3 248 914
- DE-A1- 102015 213 195
- JP-A- S59 124 606
- KR-A- 20180 056 945
- US-A- 5 220 986

## Description

### BACKGROUND

Package chutes (sloping channels or slides) can be used to convey packages from a higher level to a lower level. For example, package chutes are used in package sorting facilities to deliver packages from a sorting conveyor out of the reach of employees to a level at which employees can reach the packages to process them.

Although it is generally desirable to reduce the floor space taken up by a chute, this desire must be weighed against considerations such as the final speed of a package on the chute, and the need for the chute to hold a certain number of packages so as not to require packages to be removed from the chute at the same rate as they are discharged onto the chute. Prior chute designs have sought to actively control packages by physically controlling and manipulating portions of the chute to slow and speed packages during use.

DE 10 2015 213195 A1 discloses a transport chute suitable for use as a store for goods that can be stacked on top of one another, in particular packages and items of luggage; comprising: a) a slide section which has an inclined slide surface; b) said slide section being interrupted by means of at least one interruption so that the slide surface is divided into at least one upper slide surface and one lower slide surface; c) said interruption being designed to facilitate the formation of at least two superimposed layers of the goods below the interruption; and d) wherein at least the lower sliding surface further comprises at least one drive means for transporting the goods which can be driven and controlled against the direction of fall and on which the goods of the lowest layer for their transport at least can partially rest. The disclosure of DE 10 2015 213195 A1 discloses also a package handling method comprising:
- discharging a plurality of packages down a package chute comprising an upper sliding surface and a step onto a holding section below the step in a direction of downward slope of the chute;
- applying a brake to hold, on the holding section, packages of the plurality of packages;
- sensing at a sensor that a package of the plurality of packages is stationary in the immediate vicinity of the step essentially at the height of the upper sliding surface and responsive to the sensing, releasing the brake to discharge the packages from the holding section into a chute end section below the holding section;
- after the packages are discharged into the chute end section, reapplying the brake.

### BRIEF DESCRIPTION OF THE DRAWINGS

Specific embodiments will be described below by way of example only and with reference to the accompanying drawings, in which:
FIG. 1 shows a perspective view of a package chute;
FIG. 2 shows a flow diagram of a package handling method;
FIG. 3 shows a bottom view of brake sections of the package chute;
FIG. 4 shows a flow diagram of the package handling method with additional steps;
FIG. 5 shows a side view of the package chute; and
FIG. 6 shows a schematic view of a control system for a brake and indicator of the package chute.

### DETAILED DESCRIPTION

The package handling method of the invention is defined in claim 1.

The package handling method can allow for more packages to be held on the package chute with which it is used than on a package chute of corresponding dimensions with which the package handling method of the present disclosure is not used. In other words, a chute taking up less floor-space can be used with this method, as compared to a chute not used with this method and having a similar holding capacity for packages. The increased holding capacity allowed for by the package handling method of the first aspect can mean that in order to avoid packages backing-up and potentially jamming the apparatus by which they are delivered to the package chute (such as a sorting conveyor) packages do not have to be processed at the same rate as they are discharged onto the chute. Instead, packages can be efficiently stacked on the chute, and held in holding sections which they await processing.

Specifically, the step of applying a brake to hold, on the first holding section, packages of the plurality of packages allows for further packages discharged down the package chute to stack on top of the packages already in the holding section. In other words, further packages passing over the step arrive on top of packages that are held stationary below the step (in the first holding section) by the use of the brake. When it is sensed that a package of the plurality of packages is stationary above the step in the direction of downward slope of the chute (in other words that packages are no longer passing over the step), the brake is released to discharge the packages that have built up in the first holding section onto a second holding section. The packages in the second holding section can be processed, while - since the brake has been reapplied - further packages accumulate and then stack in the first holding section.

The present disclosure also relates, in an example useful for understanding the invention, to a package chute comprising a plywood surface and a stainless steel surface, the plywood surface and the stainless steel surface arranged on the path of travel of a plurality of packages down the chute, the plywood surface located before or after the steel surface on the path of travel, wherein the plywood surface is arranged to be, in use, at an angle of approximately 12° to 17° to the horizontal and the steel surface is arranged to be, in use, at an angle of approximately 20° to 25° to the horizontal.

The package chute of the example useful for understanding the invention allows for a controlled velocity of descent of packages down the chute. In particular, it allows for packages to descend the chute relatively quickly, without too great a mismatch in speeds between polythene-wrapped packages (also known as "polybags") and cardboard-wrapped packages (also known as "cartons"). The package chute of the example useful for understanding the invention also accommodates factors such as the height of the apparatus that delivers packages to the chute (such as a sorting conveyor), the floor space available for the package chute, and the desired holding capacity of the chute. The present inventor has surprisingly discovered that polybags are slowed more by a steeper surface than they are by a less steep one. Thus, the plywood surface at an angle of approximately 12° to 17° to the horizontal allows polybags to move relatively quickly down it. A steeper section of steel at approximately 20° to 25° to the horizontal helps to reduce the footprint of the chute, and allows cartons to move relatively quickly down this section.

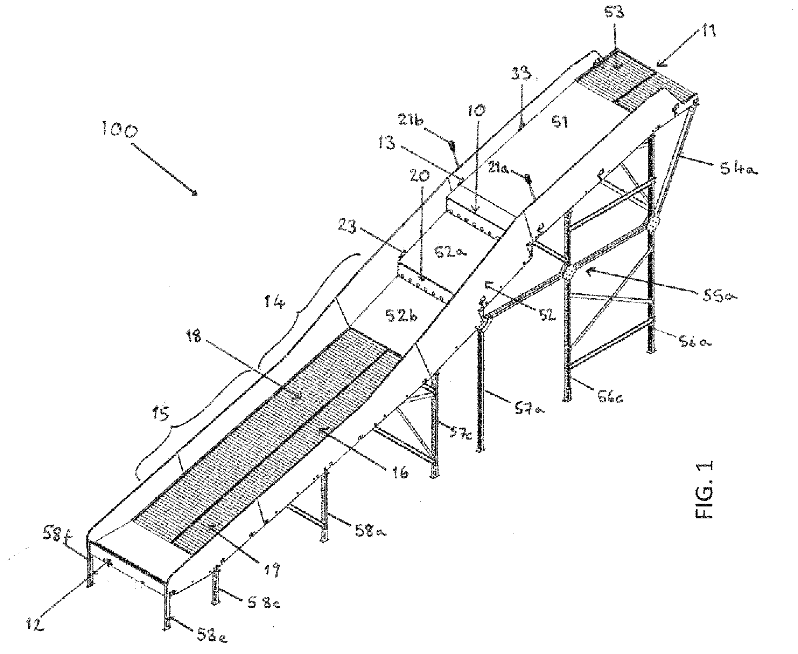

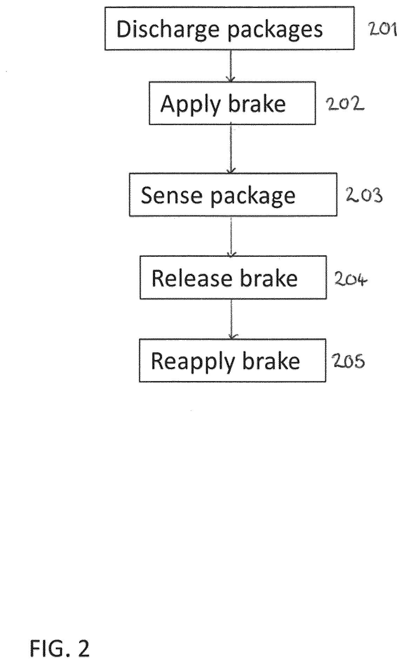

FIG. 1 shows a perspective view of an example of a package chute in accordance with this example useful for understanding the invention. FIG. 2 shows a flow diagram of an example of the package handling method in accordance with the first aspect. The example package chute of FIG. 1 can be used with the package handling method. Features of the package chute that allow it to be used in this way will now be described in overview, with reference to FIG. 1.

The package chute (100) of FIG. 1 slopes downwards from a top end (11) to a bottom end (12). Packages discharged onto the chute at the top end (11), for example from a sorting conveyor (not shown in FIG. 1), will slide down the chute to the bottom end (12). At the bottom end (12), the packages can be retrieved for further processing. Thus, the package chute (100) can be used, for example, in a sorting facility to deliver packages from a sorting conveyor positioned out of reach of a sorting facility employee, to a comfortable height for the sorting facility employee to process the packages.

The package chute (100) has a step (10) between the top and the bottom end. The step (10) could alternatively be described as a "drop" or as a "cascade section". The step (10) is formed by the overall downwards slope of the package chute (10) being discontinuous, with a vertical or near-vertical portion at the step (10). The package chute (100) is thus arranged such that packages passing over the step (10) can stack on top of any packages immediately below the step (10). In this example, the step (10) is 275mm in height. The height of the step (10) is based on the typical dimensions of packages discharged onto the package chute. The height of the step (10) is selected so as to be greater than the height of at least some of the packages that will be discharged onto the chute, so as to allow packages to stack on top of at least some of the other packages. In other examples, therefore, the step can be at least 270mm in height. The height of the step (10) may also be selected so as to reduce the risk of damage to packages travelling over the step that might occur if the step were too high. Thus, in certain examples, the step can be between 270mm and 330mm in height.

The package chute (100) has a package sensor (13) above the step (10) along the direction of downward slope of the package chute (100). As this direction is also the direction of flow of packages along the package chute (100), it may also be referred to as the "package flow direction". Thus, the package sensor (13) can be said to be before the step (10) in the package flow direction. The package sensor (13) is configured to sense that a package is stationary adjacent to it. In other words, the package sensor (13) is configured to sense that there is a package in front of it over a predetermined period of time. In this example, the package sensor (13) is implemented as a photoelectric sensor that is operable to transmit an infrared beam across the width of the package chute (100) and to detect the beam being reflected back when the beam is not interrupted. Packages passing through the beam interrupt the beam. Thus, when the beam is interrupted for a predetermined period of time, the package sensor (13) senses that a package is stationary adjacent to it. In this example, it is determined that a package is stationary when the beam is interrupted for at least 30 seconds. In other examples, the predetermined time can be shorter or longer, according to the expected speed of package flow down the chute (100). The package sensor (13) can alternatively be implemented using a sensor transmitting a beam of another sort, for example visible red light, laser light or ultrasound.

The package chute (100) has a first holding section (14) below the step (10) along the direction of downward slope of the package chute (100). The first holding section (14) is therefore after the step (10) in the package flow direction. The first holding section (14) is a section of the package chute (100) in which packages can accumulate. The first holding section (14) in the example package chute (100) shown in FIG. 1 is made up in part of a sliding section (52b) and a roller section (18) (which will each be described in more detail below in relation to the package chute of the example useful for understanding the invention). The package chute (100) also has a second holding section (15). This second holding section (15) is located after the first holding section (14) in the package flow direction. In this example, the second holding section (15) is part of the roller section (18).

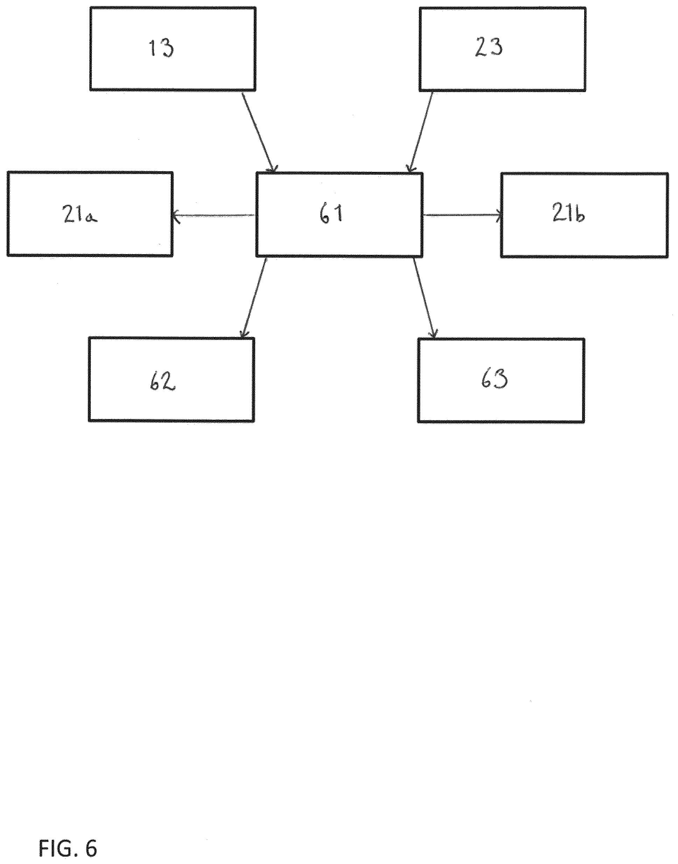

The first (14) and second (15) holding sections are separated by a brake (16). The brake (16) is operable to hold packages on the first holding section (14). It is also operable to be released to allow packages to be discharged from the first holding section (14) onto the second holding section (15). In this example, the brake (16) is formed from a set of rubberised rollers (not shown in FIG. 1), that are operable to be braked by a brake actuator (61) (shown schematically in FIG. 6), thereby braking the movement of a package on top of the rollers.

In this example, the sensor (13) and brake (16) are connected via wired connections to a microcontroller (61). The microcontroller (61) is shown schematically in FIG. 6. The microcontroller is operable to receive signals from the sensor (13) and to send commands to a brake actuator (62) to apply or release the brake (16). The skilled person would understand that in other examples, such signals and commands can be sent and received in other ways, for example wirelessly, and/or to and from a processing unit other than in a microcontroller, such as in another programmable computing device or dedicated computing device.

With reference now to FIG. 2, a package handling method (200) according to the first aspect will now be described. As discussed above, such a method (200) can be used with the example package chute (100) shown in FIG. 1. FIG. 1 will therefore also be referred to in the context of the discussion of the method (200) of FIG. 2.

As show in FIG. 2, the package handling method (200) has, in overview, the following steps:
discharging (201) a plurality of packages down a package chute comprising a step onto a first holding section below the step in a direction of downward slope of the chute;
applying (202) a brake to hold, on the first holding section, packages of the plurality of packages;
sensing (203) at a sensor that a package of the plurality of packages is stationary above the step in the direction of downward slope of the chute;
responsive to the sensing, releasing (204) the brake to discharge the packages from the first holding section onto a second holding section below the first holding section in the direction of downward slope of the chute; and
after the packages are discharged onto the second holding section, reapplying (205) the brake.

This package handling method (200) will now be described in more detail in the context of its use with the package chute (100) shown in FIG. 1. As discussed above, the package chute (100) of FIG. 1 has a step (10), a package sensor (13) above the step (10) in the package flow direction, a first holding section (14) after the step (10), a second holding section (15) after the first holding section (14), and a brake (16) between the first (14) and second (15) holding sections.

In this example, the step of discharging (201) a plurality of packages down the package chute (100) is performed by a sorting conveyor (not shown in FIG. 1). The sorting conveyor is a conveyor belt running past the top end (11) of the package chute (100), from which packages can be diverted to enter the chute (100) at its top end (11), thereby discharging them down the chute (100). The step of applying (202) the brake (16) to hold, on the first holding section (14), packages of the plurality of packages can be performed before or after packages are discharged (201) down the chute (100), provided that it is performed in time to allow packages to accumulate in the first holding section (14). In this example, the step of applying (22) the brake (16) is performed before the packages are discharged (201) down the package chute (100).

The first packages discharged (201) down the chute (100) and over the step (10) will reach the brake (16) and travel no further. They will therefore remain in the first holding section (14). Once a certain number of further packages have been discharged (201) down the chute (100), the first holding section (14) will be full of a single layer of packages. Further packages passing over the step (10) will therefore pile on top of the other packages in the first holding section (14). In this way, the first holding section (14) can hold more packages than if all the packages in this section (14) were in a single layer.

Eventually, the entry to the first holding section (14) will be blocked by a double layer of packages. Packages discharged (201) down the chute at this point will begin to accumulate above the step (10). This is sensed (203) at the sensor (13). Responsive to the sensing (203) that a package is stationary above the step (10), the brake is released (204). This allows the packages that had accumulated in the first holding section (14) - many of them in a double layer - to move into the second holding section (15). The packages can then be processed, while the first holding section (14) is freed for further packages to accumulate. By reapplying (205) the brake (16), the method can begin again. In other words, further packages discharged (201) down the chute (100) can be held in the first holding section (14) until double layer has formed and packages begin to back up above the step (10), at which point, in some examples, the brake (16) can be re-released.

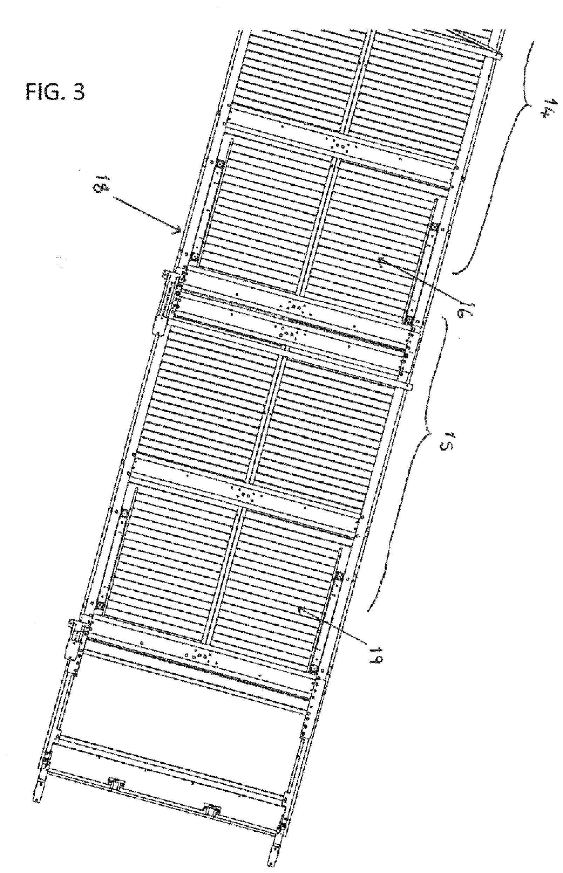

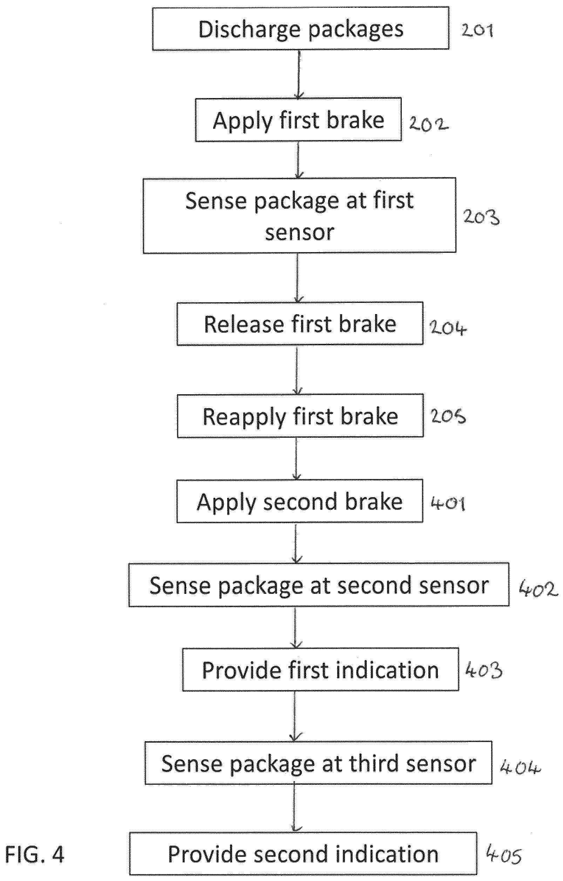

In some examples, additional components of the chute (100) allow for additional steps of the method (200) to be performed. These additional components will now be described, with reference once more to FIG. 1, and with additional reference to FIG. 3. The additional method steps that can be performed using these components will then be described with reference to FIG. 4.

In some examples, in addition to the brake (16) described above, the chute (100) also has a second brake (19). The brake (16) (which in this example is the "first brake") and the second brake (19) are shown from below in FIG. 3. The second brake (19) is located after the first brake (16) in the direction of travel of packages down the chute (100) (that is, in the direction of downward slope of the package chute (100)). In this example, the section of the chute (100) between the first (16) and second (19) brakes forms the second holding section (15). In this example, the second brake (19) is, like the first brake (16), in the form of rubberised rollers that can be prevented from turning, so as to brake packages on the rollers. In other examples, the first (16) and second (19) brakes can be dissimilar.

In some examples, the chute (100) also has a second step (20). In such examples, the step (10) previously described with reference to FIG. 1 is a first step (10). The second step (20) is located below the first step (10) in the direction of downward slope of the package chute (100). In other words, the second step (20) is arranged such that it is encountered after the first step (10) by packages descending the package chute (100). In examples in which the package chute (100) has this second step (20), the package chute (100) can also have a second sensor (23). The second sensor (23) is located above the second step (20) such that it can sense that a package is stationary above the second step (20). In these examples, the sensor (13) previously described with reference to FIG. 1 is a first sensor. The second (23) sensor can be of the same kind as the first sensor (13) described above, and work in the same way. Alternatively it can be any other kind of suitable sensor, such as the alternative sensor types listed above in relation to the first sensor (13). In these examples, the chute (100) also has a pair of lamps (21a, 21b) which serve as indicators of sensed package position (as will be described further below with reference to FIG. 4). In this example, the lamps (21a, 21b) are set up so as to flash when a signal is received from the second sensor (23). It will be understood by the skilled person that an indication could equally be provided by any device suitable for alerting an operator of package position. For example, the indication could be provided by an alarm, a recorded message, or a message appearing on a screen.

In examples in which the chute (100) has first (10) and second (20) steps and first (13) and second (23) sensors, the chute (100) can also have a third sensor (33). This third sensor (33) is arranged upstream of the first sensor (13). In other words, it is located above the first (13) and second (23) sensors in the direction of downward slope of the chute (100). It could also be said to be arranged before the first (13) and second (23) sensors in a direction of movement of packages down the chute (100). In still other words, it is closer to the top end (11) of the chute (100) than the first (13) and second (23) sensors. Like the first (13) and second (23) sensors, the third sensor (33) is set up so as to be able to sense that a package is stationary adjacent to it. In this example, the third sensor (33) is a photoelectric sensor of the sort described above in relation to the first sensor (13). However, other suitable sensors can be used in other examples, as discussed above in relation to the first sensor (13). Like the second sensor (23), the third sensor (33) is operable to send a signal to an indicator, in order to provide an indication that a package is stationary adjacent to it. In this example, the above-discussed microcontroller (61) that is set up to receive signals from the first sensor (13) and send commands to the actuator (62) of the first brake (16) is also wired so as to receive signals from the second sensor (23) and to command operation of an actuator (63) of the second brake (19) as well as the first (21a) and second (21b) lamps. This is shown schematically in FIG. 6. As noted above, the skilled person would understand that in other examples, such signals and commands can be sent and received in other ways, for example wirelessly, and/or to and from a processing unit other than in a microcontroller, such as to or from another programmable computing device or dedicated computing device.

With reference now to FIG. 4, further steps of the method (200) of FIG. 2 that can be performed using a package chute having the relevant features of those described above will now be described. The skilled person will understand that only some of the features of the package chute (100) described above are required for each optional additional method step (as is clear from the description of these method steps, below).

The second brake (19) can be applied (401) to hold packages released from the first holding section (14) in the second holding section (15). This method step (401) is shown in FIG. 4. By applying (401) the second brake (19) and thereby holding packages released from the first holding section (14) in the second holding section (15), the method allows for packages to be held in the second holding section (15) so as to be processed.

As described above, when packages build up above the step (10), the first brake (16) is released (204). The method has the additional step, after sensing at the sensor (13) that a package is stationary above the step (10) and releasing the brake (16) to discharge the packages from the first holding section (14) into the second holding section (16), of sensing for a second time at the sensor (13) that a package is stationary above the step (10) and responsive to the sensing, providing an indication that at least one package is stationary above the step (10). In practice in this example, the indication is provided by the lamps (21a, 21b). It will be understood by the skilled person that an indication could equally be provided by any device suitable for alerting an operator of package position. For example, the indication could be provided by an alarm, a recorded message, or a message appearing on a screen. By waiting for the sensor (13) to be triggered for a second time before indicating that a package is stationary above the step (10), this step allows for an indication to be provided only when action may be needed to remove packages from the chute (100). This is because the first time that the sensor (13) senses a package stationary adjacent to it, packages can be moved from the first holding section (14) to the second holding section (15), without requiring packages to be removed from the chute (100).

Where a second sensor (23) is present, the second sensor (23) can sense (402) that a package is stationary above the second step (20) and, responsive to the sensing, the lamps (21a, 21b) provide (402) an indication that at least one package is stationary above the second step (20). In this way, an operator of the chute (100) can be alerted that packages are accumulating above the second step (20) and that it may be appropriate to take action to prevent packages also building up above the first step (10). As described above, when packages build up above the first step (10), the first brake (16) is released (204). When a package is sensed (402) at the second sensor (23) but not at the first sensor (13), in contrast, it is not necessary to release (204) the first brake (16). The provision (402) of an indication that at least one package is stationary above the second step (20) can alert an operator that the package chute (100) is filling up, so that action to clear packages downstream of the second sensor (23) can be taken if necessary.

The third sensor (33), where present, can also sense (404) that a package is stationary adjacent to it. Responsive to this sensing, and indication is provided (405) that a package is stationary adjacent the third sensor (33). As the third sensor (33) is located above the first sensor (13) in the direction of downward slope of the chute (100), the indication that a package is stationary adjacent the third sensor (33) serves as an indication that a package or packages are building up closer to the top end (11) of the package chute (100) than the other sensors (13, 23). Such an indication can be useful to indicate that the package chute (100) is almost full, and that action must be taken to allow packages down the chute, in order not to risk jamming the mechanism by which packages are delivered to the chute (100) (in this example a sorting conveyor). In this example, the indication is provided (405) by the lamps (21a, 21b) and by a signal sent to a control room of the package sorting facility.

It is noted that in the above-described examples, whenever a step is described as being performed responsive to an occurrence, the step can be performed automatically, without requiring intervention by a sorting facility employee. For example, the above-described microcontroller or other processing unit can command performance of these steps.

The above description relates to a package handling method (200) and a chute (100) on which the method (200) can be implemented.

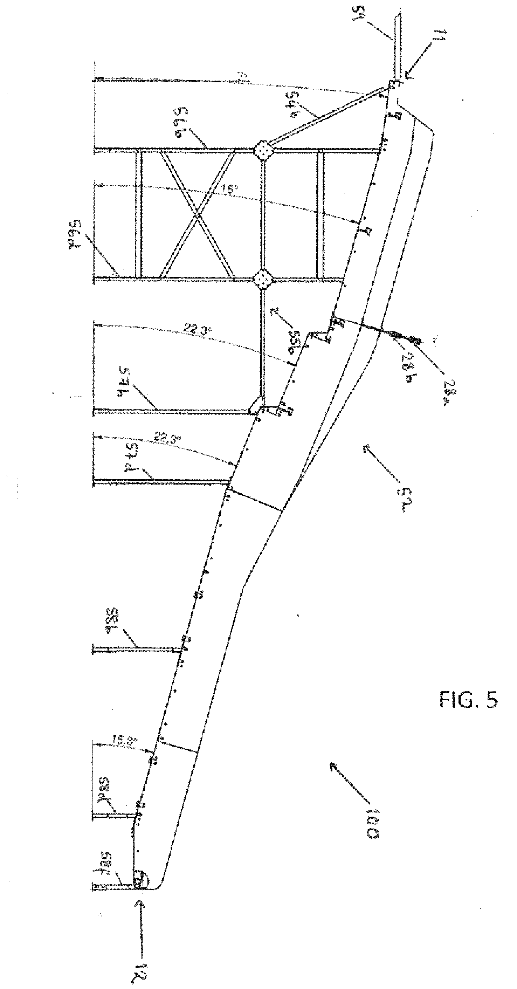

With reference now to FIGS. 1 and 5, the package chute (100) of the example useful for understanding the invention will now be described. The package chute (100) of the example useful for understanding the invention can be implemented separately from the method (200) of the first aspect, or together with that method. As discussed above, in an example useful for understanding the invention, there is provided a package chute (100) comprising a plywood surface and a stainless steel surface, the plywood surface and the stainless steel surface arranged on the path of travel of a plurality of packages down the chute, the plywood surface located before or after the steel surface on the path of travel, wherein the plywood surface is arranged to be, in use, at an angle of approximately 12° to 17° to the surface on which the chute is arranged to be supported in use and the steel surface is arranged at an angle of approximately 20° to 25° to the surface on which the chute is arranged to be supported in use.

Certain components of the package chute (100) have already been described with reference to FIG. 1, in relation to the first aspect. Discussion of these components will therefore not be repeated in detail in relation to the example useful for understanding the invention. The package chute (100) of the example useful for understanding the invention has a plywood surface (51) and a stainless steel surface (52). The plywood surface (51) is arranged on the path of travel of packages down the chute (100) such that packages discharged down the chute (100) will slide along the plywood surface (51). In other words, the plywood surface (51) forms part of the sliding surface of the chute (100).

The stainless steel surface (52) is also arranged on the path of travel of packages down the chute (100) such that packages discharged down the chute (100) will slide along the stainless steel surface (52). The stainless steel surface (52) therefore forms another part of the sliding surface of the chute (100). In the example shown in FIGS. 1 and 5, the plywood surface (51) is arranged before the stainless steel surface (52) on the path of travel of packages down the chute (100). In other words, the plywood surface (51) is arranged above the stainless steel surface (52) in a direction of downward slope of the chute (100). In other examples, the order of the plywood surface (51) and stainless steel surface (52) can be reversed.

In accordance with the example useful for understanding the invention, the plywood surface (51) is arranged at an angle of approximately 12° to 17° to the horizontal, and in some examples including the present example, at an angle of approximately 14° to 16° to the horizontal. In this example, the plywood surface (51) is arranged at 16° to the floor (which is taken to be horizontal). In this example, the plywood surface (51) is supported on legs (56a-d) so as to achieve this angle to the floor. In accordance with the example useful for understanding the invention, the steel surface (52) is arranged at an angle of approximately 20° to 25° to the horizontal, and in some examples including the present example, at an angle of approximately 21° to 22.5° to the horizontal. In this example, the plywood surface (51) is arranged at 22.3° to the floor. In this example, further legs (57a-d), of which two (57a, 57b) are connected to the plywood-surface-supporting legs (56c, 56d) by respective cross-bars (55a, 55b), support the plywood surface (51) so as to achieve the angle of 22.3° to the floor. It would be understood by the skilled person that substantially any supporting structure able to bear the weight of the plywood and steel sections of the package chute (100) could be used to achieve the relevant angles to the surface on which the package chute (100) is supported.

As discussed above, the present inventor has discovered, surprisingly, that polybags are slowed more by a steeper surface than they are by a less steep one. The plywood surface (51) at an angle of 16° to the horizontal thus allows polybags to move relatively quickly down it. As compared to a chute in which the sliding surfaces are the same length, but at a shallower angle, the steel surface (52) at 22.3° to the horizontal helps to reduce the footprint of the chute (100) while ensuring that the top end (11) is at an appropriate height to mate with a mechanism for discharging packages down the chute (100) (in this example a sorting conveyor), and the bottom end (12) is at an appropriate height for further processing of the packages (for example by a sorting facility employee, another conveyor or chute, or an automated or robotic sorter). The steel surface (52) at the steeper angle than the plywood surface also allows cartons to move relatively quickly down the steel surface (52).

In the example shown in FIGS. 1 and 5, the package chute (100) has a step (10) between the plywood surface (51) and the steel surface (52). The step (10) and its function were described above as part of the discussion of the features of the chute (100) that allow it to be used to implement the method (200) of the first aspect. Apart from enabling stacking of packages on the chute (100) as described above, the step (10) also helps to achieve the desired difference in height between the top (11) and bottom (12) ends of the chute (100), without extending the length of the chute (100). It will be understood by the skilled person that in other examples, the plywood surface (51) and steel surface (52) can adjoin, without a step between them.

In the present example, the stainless steel surface (52) has an upper section (52a) and a lower section (52b). In other words, the stainless steel surface (52) has a first section (52a) that is above a second section (52b) in a direction of downwards slope of the chute (100). That is, the upper section (52a) is arranged before the lower section (52b) on the path of travel of packages down the chute (100). The chute (100) has a step (20) between the upper section (52a) and the lower section (52b) of the stainless steel surface (52). This step (20) and its function were discussed above in relation to the description of the features of the chute (100) that allow for implementation of the method of the first aspect, where it was described as the "second step" (20). Apart from this above-described function of the second step (20) of enabling stacking of packages on the chute (100), the second step (20) also helps to achieve the desired difference in height between the top (11) and bottom (12) ends of the chute (100), without extending the length of the chute (100). In other examples, the stainless steel surface (52) can be formed as a single continuous surface. In other words, in other examples, the stainless steel surface (52) need not have a step.

Returning to the discussion of the package chute (100) as shown in FIGS. 1 and 5, the package chute has a conveyor section (53) arranged before the plywood surface (51) and the stainless steel surface (52) on the path of travel of packages down the chute (100). The conveyor section (53) is visible only in FIG. 1. The conveyor section (53) is at the top end (11) of the chute (100). In this example, the conveyor section (53) adjoins the plywood surface (51). In this example, the conveyor section (53) is formed of rollers. The skilled person would understand, however, that any suitable mechanism for conveying packages across this section of the chute could be used. For example, the conveyor section (53) could be made up of a conveyor belt. The conveyor section (53) is arranged to be adjusted in height. In particular, the conveyor section (53) is arranged such that the end of the conveyor section (53) that is remote from, or distal to, the rest of the package chute (100) can be raised and lowered with respect to the package chute (100).

In this example, the end of the conveyor section (53) that adjoins the plywood surface (51) is connected to the plywood surface (51) via a pivot, such that the conveyor section (53) can pivot upwards and downwards with respect to the plywood surface (51). The end of the conveyor section (53) that is remote from the plywood surface (51) is supported by two struts (54a, 54b). FIGS. 1 and 5 each show one of the struts.

In this example, the end of each of these struts (54a, 54b) fits into a corresponding slot in the bottom of the conveyor section (53). The slots (not shown) are arranged with their lengths parallel to the length of the chute (100). The end of each of the struts (54a, 54b) therefore has a number of possible positions within its respective slot. The end of each of the struts (54a, 54b) is secured in position by a bolt. The bolt can be placed in any position along the slot so as to ensure a desired position of the end of the strut within the slot. The struts (54a, 54b) are each in turn supported, respectively, at their other ends by the legs (56a, 56b) supporting the plywood surface (51). The struts (54a, 54b) are pivotally-mounted with respect to these legs (56a, 56b). Thus, to lower the end of the conveyor section (53), the ends of the struts (54a, 54b) can be moved towards the end of the slots that is distal from the rest of the chute (100), and bolted in place. To raise the end of the conveyor section (53), the ends of the struts (54a, 54b) can be moved towards the end of the slots that is closest to the rest of the chute (100), and bolted in place.

The adjustable height of the conveyor section (53) can be achieved in other ways. For example, each of the struts (54a, 54b) can be adjustable in length, and fitted into corresponding holes or depressions in the bottom of the conveyor section (53). In such an example, the struts (54a, 54b) can be fixed with respect to the legs (56a, 56b) to which they are attached, and held by the holes in a fixed position in the conveyor section (53). Alternatively, the conveyor section (53) could be connected to the plywood surface (51) via a locking hinge, which would allow for the end of the conveyor section (53) that is remote from, or distal to, the rest of the package chute (100) to be raised and lowered with respect to the package chute (100) without the use of adjustable-angle or adjustable-length struts.

The feature that the conveyor section (53) is arranged to be adjusted in height can allow the top end (11) of the package chute (100) to be positioned at the same height as a mechanism by which packages are discharged onto the chute (100). This allows packages to be discharged smoothly onto the chute (100). In the present example, the mechanism by which packages are discharged onto the chute (100) is a sorting conveyor (59), part of which is shown in cross-section in FIG. 5. The adjustable-height conveyor section (53) thus allows the package chute (100) to be used with sorting conveyors of different heights, providing for a more versatile package chute (100) than a chute which does not have such an adjustable-height component.

As described above in relation to the first aspect, the package chute (100) also has, in this example, a roller section (18) that is after the plywood surface (51) and the stainless steel surface (52) on the path of travel of packages down the chute. In other words, the roller section (18) is arranged below the plywood surface (51) and stainless steel surface (52) in a direction of downward slope of the package chute (100). The roller section (18), shown in perspective view in FIG. 1 and from below in FIG. 3, provides a final means by which the speed of packages descending the chute (100) can be controlled. The roller section (18) also provides, in this example, the first (16) and second (19) brakes to be implemented as part of the roller section (18).

There has therefore been described a package handling method and a package chute in accordance an example useful for understanding the invention. As noted above, the method can be implemented independently of the chute of the example useful for understanding the invention, and the chute of the example useful for understanding the invention can be implemented independently of the method. Alternatively, the method of the first aspect can be implemented with the chute of the example useful for understanding the invention. Optional features of the package chute described in relation to the method are also optional features of the chute described in relation to the example useful for understanding the invention, and vice versa, with changes of terminology being inferred by the skilled addressee where necessary for these to make sense. The extent of protection is determined by the claims.

## Claims

1. A package handling method (200), the method comprising:
discharging (201) a plurality of packages down a package chute (100) comprising a step (10) onto a first holding section below the step in a direction of downward slope of the chute;
applying (202) a brake (16) to hold, on the first holding section (14), packages of the plurality of packages;
sensing (203) at a sensor (13) that a package of the plurality of packages is stationary above the step (10) in the direction of downward slope of the chute (100); and
responsive to the sensing, releasing (204) the brake (16) to discharge the packages from the first holding section (14) into a second holding section (15) below the first holding section in the direction of downward slope of the chute (100);
after the packages are discharged into the second holding section (15), reapplying (205) the brake (16); and
after sensing at the sensor (13) that the package of the plurality of packages is stationary above the step (10) in the direction of downward slope of the chute and after, responsive to the sensing, releasing the brake (16) to discharge the packages:
sensing for a second time at the sensor (13) that a package of the plurality of packages is stationary above the step (10) in the direction of downward slope of the chute; and
responsive to the sensing, providing an indication that at least one package is stationary above the step (10).

2. The package handling method of claim 1, wherein the step (10) is at least 270mm in height, and optionally wherein the step is between 270mm and 330mm in height.

3. The package handling method of claim 1 or claim 2, wherein the brake (16) is a first brake (16), the method further comprising:
applying (401) a second brake (19) to hold the packages released from the first holding section (14) in the second holding section (15).

4. The package handling method of any preceding claim, wherein the step (10) is a first step (10), the chute (100) further comprises a second step (20) below the first step (10), the sensor (13) is a first sensor (13), and the method further comprises:
sensing (402) at a second sensor (23) that a package of the plurality of packages is stationary above the second step (20) in the direction of downward slope of the chute (100); and
responsive to the sensing (402), providing (403) an indication that at least one package is stationary above the second step (20).

5. The package handling method of claim 4, the method further comprising:
sensing (404), at a third sensor (33) located above the first and second sensors in the direction of downward slope of the chute, that at least one package is stationary adjacent the third sensor (33); and
responsive to the sensing (404), providing (405) an indication that at least one package is stationary adjacent the third sensor (33).

## Patentansprüche

1. Paketumschlagverfahren (200), wobei das Verfahren Folgendes umfasst:
Entladen (201) einer Mehrzahl von Paketen eine Paketrutsche (100) mit einer Stufe (10) hinunter auf einen ersten Halteabschnitt unterhalb der Stufe in einer Richtung eines Abwärtsgefälles der Rutsche;
Betätigen (202) einer Bremse (16) zum Halten von Paketen der Mehrzahl von Paketen auf dem ersten Halteabschnitt (14) ;
Erfassen (203) an einem Sensor (13), dass ein Paket der Mehrzahl von Paketen oberhalb der Stufe (10) in der Richtung des Abwärtsgefälles der Rutsche (100) stillsteht; und
in Reaktion auf das Erfassen, Freigeben (204) der Bremse (16) zum Entladen der Pakete aus dem ersten Halteabschnitt (14) in einen zweiten Halteabschnitt (15) unterhalb des ersten Halteabschnitts in der Richtung des Abwärtsgefälles der Rutsche (100);
nachdem die Pakete in den zweiten Halteabschnitt (15) entladen sind, erneutes Betätigen (205) der Bremse (16);
und
nach Erfassen an dem Sensor (13), dass das Paket der Mehrzahl von Paketen oberhalb der Stufe (10) in der Richtung des Abwärtsgefälles der Rutsche stillsteht, und
nach Freigeben der Bremse (16) in Reaktion auf das Erfassen zum Entladen der Pakete:
Erfassen für eine zweite Zeit an dem Sensor (13), dass ein Paket der Mehrzahl von Paketen oberhalb der Stufe (10) in der Richtung des Abwärtsgefälles der Rutsche stillsteht; und
in Reaktion auf das Erfassen, Bereitstellen einer Anzeige, dass mindestens ein Paket oberhalb der Stufe (10) stillsteht.

2. Paketumschlagverfahren nach Anspruch 1, wobei die Stufe (10) mindestens 270 mm hoch ist, und optional wobei die Stufe zwischen 270 mm und 330 mm hoch ist.

3. Paketumschlagverfahren nach Anspruch 1 oder Anspruch 2, wobei die Bremse (16) eine erste Bremse (16) ist, wobei das Verfahren ferner Folgendes umfasst: Betätigen (401) einer zweiten Bremse (19) zum Halten der aus dem ersten Halteabschnitt (14) freigegebenen Pakete in dem zweiten Halteabschnitt (15).

4. Paketumschlagverfahren nach einem der vorhergehenden Ansprüche, wobei die Stufe (10) eine erste Stufe (10) ist, wobei die Rutsche (100) ferner eine zweite Stufe (20) unterhalb der ersten Stufe (10) umfasst, wobei der Sensor (13) ein erster Sensor (13) ist, und wobei das Verfahren ferner Folgendes umfasst:
Erfassen (402) an einem zweiten Sensor (23), dass ein Paket der Mehrzahl von Paketen oberhalb der zweiten Stufe (20) in der Richtung des Abwärtsgefälles der Rutsche (100) stillsteht; und
in Reaktion auf das Erfassen (402), Bereitstellen (403) einer Anzeige, dass mindestens ein Paket oberhalb der zweiten Stufe (20) stillsteht.

5. Paketumschlagverfahren nach Anspruch 4, wobei das Verfahren ferner Folgendes umfasst:
Erfassen (404) an einem dritten Sensor (33), der sich oberhalb der ersten und zweiten Sensoren in der Richtung des Abwärtsgefälles der Rutsche befindet, dass mindestens ein Paket angrenzend an den dritten Sensor (33) stillsteht; und
in Reaktion auf das Erfassen (404), Bereitstellen (405) einer Anzeige, dass mindestens ein Paket angrenzend an den dritten Sensor (33) stillsteht.

## Revendications

1. Procédé de manutention d'emballage (200), comprenant les étapes consistant à :
décharger (201) une pluralité d'emballages le long d'une goulotte (100) à emballages comprenant une marche (10) sur une première section de maintien située sous la marche, dans la direction de la pente descendante de la goulotte ;
appliquer (202) un frein (16) pour maintenir, sur la première section de maintien (14), les emballages de la pluralité d'emballages ;
détecter (203) au niveau d'un capteur (13) qu'un emballage de la pluralité d'emballages est stationnaire au-dessus de la marche (10) dans la direction de la pente descendante de la goulotte (100) ; et
en réponse à la détection, relâcher (204) le frein (16) pour décharger les emballages de la première section de maintien (14) dans une seconde section de maintien (15) en dessous de la première section de maintien dans la direction de la pente descendante de la goulotte (100) ;
après que les emballages ont été déchargés dans la seconde section de maintien (15), appliquer à nouveau (205) le frein (16) ; et
après avoir détecté au niveau du capteur (13) que l'emballage de la pluralité d'emballages est stationnaire au-dessus de la marche (10) dans la direction de la pente descendante de la goulotte et après avoir, en réponse à la détection, relâché le frein (16) pour décharger les emballages :
détecter une seconde fois au niveau du capteur (13) qu'un emballage de la pluralité d'emballages est stationnaire au-dessus de la marche (10) dans la direction de la pente descendante de la goulotte ; et
en réponse à la détection, fournir une indication qu'au moins un emballage est stationnaire au-dessus de la marche (10).

2. Procédé de manutention d'emballage selon la revendication 1, la marche (10) ayant une hauteur d'au moins 270 mm, et éventuellement la marche ayant une hauteur comprise entre 270 mm et 330 mm.

3. Procédé de manutention d'emballage selon la revendication 1 ou revendication 2, le frein (16) étant un premier frein (16), le procédé comprenant en outre l'étape consistant à :
appliquer (401) un second frein (19) pour maintenir les emballages libérés de la première section de maintien (14) dans la seconde section de maintien (15).

4. Procédé de manutention d'emballage selon l'une quelconque des revendications précédentes, la marche (10) étant une première marche (10), la goulotte (100) comprenant en outre une seconde marche (20) en dessous de la première marche (10), le capteur (13) étant un premier capteur (13), et le procédé comprenant en outre les étapes consistant à :
détecter (402) au niveau d'un deuxième capteur (23) qu'un emballage de la pluralité d'emballages est stationnaire au-dessus de la seconde marche (20) dans la direction de la pente descendante de la goulotte (100) ; et
en réponse à la détection (402), fournir (403) une indication qu'au moins un emballage est stationnaire au-dessus de la seconde marche (20).

5. Procédé de manutention d'emballage selon la revendication 4, le procédé comprenant en outre les étapes consistant à :
détecter (404), au niveau d'un troisième capteur (33) situé au-dessus des premier et deuxième capteurs dans la direction de la pente descendante de la goulotte, qu'au moins un emballage est stationnaire à proximité du troisième capteur (33) ; et
en réponse à la détection (404), fournir (405) une indication qu'au moins un emballage est stationnaire à proximité du troisième capteur (33).
